# EUROPEAN PATENT SPECIFICATION

(11) **EP 4 198 484 B1**
(45) Date of publication and mention of the grant of the patent: **22.01.2025**
(21) Application number: 22825229.2
(22) Date of filing: 10.06.2022
(51) Int. Cl.: G01N 1/22, G01N 1/44, G02F 1/13, G02F 1/13357, G01N 1/24

(54) **PHOTOCURING GENERATION-GAS COLLECTING DEVICE**
PHOTOHÄRTENDE ERZEUGUNGSGASSAMMELVORRICHTUNG
DISPOSITIF DE COLLECTE DE GAZ GÉNÉRÉ PAR PHOTODURCISSEMENT

(30) Priority: 15.06.2021 KR 20210077294; 31.05.2022 KR 20220066867
(43) Date of publication of application: 21.06.2023
(73) Proprietor: LG Chem, Ltd., Yeoui-daero, Youngdungpo-gu Seoul 07336 (KR)
(72) Inventor: CHUNG, So Yi, Daejeon 34122 (KR); JIN, Eunyeong, Daejeon 34122 (KR); LIM, Young Hee, Daejeon 34122 (KR)
(74) Representative: Goddar, Heinz J.
(86) International application number: PCT/KR2022/008189
(87) International publication number: WO 2022/265304

(56) References cited:
- JP-A- 2009 300 167
- KR-A- 20190 033 437
- US-A- 5 986 747
- US-A1- 2004 020 511
- US-A1- 2007 298 362
- US-A1- 2013 284 087
- US-A1- 2016 079 085
- US-B2- 9 924 585

## Description

### TECHNICAL FIELD

The present disclosure relates to an apparatus for collecting photocuring generated gas, and to an apparatus for collecting photocuring generated gas for collecting gas generated from a sample while performing photocuring of the sample with various light wavelengths including ultraviolet light.

### BACKGROUND ART

When manufacturing liquid crystals used for TVs, etc., a photocuring process using ultraviolet light may be performed, and in this case, a defect issue may occur due to outgas generated from products exposed to light such as ultraviolet light. Therefore, there is a demand for a technology for analyzing the gas generated by simulating process conditions for a product.

In general, a UV irradiation apparatus is an open system, and it was difficult to collect the gas generated during UV curing and utilize it for analysis. In addition, a pretreatment apparatus for collecting outgas was only possible to control the temperature, but it was impossible to expose the sample during heating.

There is a need for a technology for collecting gas generated in the process of photocuring with various wavelengths of light including ultraviolet light.

US 2016/079 085 A1 describes that flash light is emitted from flash lamps to the surface of a semiconductor substrate on which a metal layer has been formed for one second or less to momentarily raise temperature on the surface of the semiconductor substrate including the metal layer and an impurity region to a processing temperature of 1000° C. or more. Heat treatment is performed by emitting flash light to the surface of the semiconductor substrate in a forming gas atmosphere containing hydrogen.

US 2007/298 362 A1 discloses that a pump liner is used to direct a laminar flow of purge gas across a workpiece to remove contaminants or species outgassed or otherwise produced by the workpiece during processing. The pump liner can take the form of a ring having a plurality of injection ports, such as slits of a variety of shapes and/or sizes, opposite a plurality of receiving ports in order to provide the laminar flow. The flow of purge gas is sufficient to carry a contaminant or outgassed species from the processing chamber in order to prevent the collection of the contaminants on components of the chamber.

### DISCLOSURE OF INVENTION

### TECHNICAL GOALS

The present invention relates to an apparatus for collecting photocuring generated gas as defined in claim 1. Preferred features of the invention are set out in the dependent claims.

Therefore, an object of the present disclosure is to provide an apparatus for collecting photocuring generated gas for collecting gas generated from a sample while performing photocuring of the sample with various light wavelengths including ultraviolet light.

### TECHNICAL SOLUTIONS

An apparatus for collecting photocuring generated gas according to the present invention includes:
a chamber unit (100) with a sample accommodating space (140) formed therein, in which a sample (11) is accommodated;
a light source unit (200) configured to irradiate light to an upper surface of the chamber unit (100);
an oven unit (300) provided with a heating space (340) accommodating the chamber unit (100) therein;
a purge gas injection flow path (111) for injecting a purge gas into the sample accommodating space (140); and
an outgas discharge flow path (112) for discharging outgas generated in the sample accommodating space (140) to a gas collection pipe located outside the sample accommodating space (140), and
a body part (130) with a sample mounting groove (131) formed on an upper surface thereof as the sample accommodating space (140),
wherein the upper surface of the chamber unit (100) is provided with a transparent cover part (120) through which the light is transmitted,
the transparent cover part (120) is configured to cover the sample mounting groove (131) and coupled to the upper surface of the body part (130), and
wherein the light irradiated by the light source unit (200) is transmitted through the transparent cover part (120),
characterized in that
an inlet (123) through which the purge gas is injected and an outlet (124) through which the outgas is discharged are formed in the transparent cover part (120),
the purge gas injection flow path (111) is connected to the inlet (123), and
the outgas discharge flow path (112) is connected to the outlet (124).

### ADVANTAGEOUS EFFECTS

According to an apparatus for collecting photocuring generated gas of example embodiments of the present disclosure, it is possible to collect gas generated from a material to be analyzed during photocuring by simulating a photocuring process using various light wavelengths including ultraviolet light.

According to an apparatus for collecting photocuring generated gas of example embodiments of the present disclosure, it is possible to accurately identify and analyze a cause of a gas defect.

According to an apparatus for collecting photocuring generated gas of example embodiments of the present disclosure, it is possible to obtain gas generated in the photocuring process according to various wavelengths of light including ultraviolet light by simultaneously performing exposure and heating.

According to an apparatus for collecting photocuring generated gas of example embodiments of the present disclosure, it is possible to easily replace the light source unit, so that gas may be collected in various wavelength bands.

### BRIEF DESCRIPTION OF DRAWINGS

FIG. 1 is a conceptual diagram illustrating an apparatus for collecting photocuring generated gas of the present disclosure.
FIG. 2 is a cross-sectional view illustrating an oven unit.
FIG. 3 is a perspective view illustrating a chamber unit.
FIG. 4 is a perspective view illustrating a transparent cover part.
FIG. 5 is a perspective view illustrating a body part.
FIG. 6 is a graph illustrating a gas collection result according to an experimental example.

### BEST MODE

An apparatus for collecting photocuring generated gas according to the present invention includes:
a chamber unit (100) with a sample accommodating space (140) formed therein, in which a sample (11) is accommodated;
a light source unit (200) configured to irradiate light to an upper surface of the chamber unit (100);
an oven unit (300) provided with a heating space (340) accommodating the chamber unit (100) therein;
a purge gas injection flow path (111) for injecting a purge gas into the sample accommodating space (140); and
an outgas discharge flow path (112) for discharging outgas generated in the sample accommodating space (140) to a gas collection pipe located outside the sample accommodating space (140), and
a body part (130) with a sample mounting groove (131) formed on an upper surface thereof as the sample accommodating space (140),
wherein the upper surface of the chamber unit (100) is provided with a transparent cover part (120) through which the light is transmitted,
the transparent cover part (120) is configured to cover the sample mounting groove (131) and coupled to the upper surface of the body part (130), and
wherein the light irradiated by the light source unit (200) is transmitted through the transparent cover part (120),
characterized in that
an inlet (123) through which the purge gas is injected and an outlet (124) through which the outgas is discharged are formed in the transparent cover part (120),
the purge gas injection flow path (111) is connected to the inlet (123), and
the outgas discharge flow path (112) is connected to the outlet (124).

In the apparatus for collecting photocuring generated gas of an example embodiment, the transparent cover part may be a quartz plate.

In the apparatus for collecting photocuring generated gas of an example embodiment, a plurality of coupling grooves may be formed on the upper surface of the body part, a coupling hole may be formed in the transparent cover part at a position facing the plurality of coupling grooves, and a fixing means may pass through the coupling hole and be inserted into the coupling groove, so that the transparent cover part may be coupled to the body part.

In the apparatus for collecting photocuring generated gas of example embodiment, the light source unit may be configured to irradiate light downward from a lower surface as a surface light source.

In the apparatus for collecting photocuring generated gas of example embodiment, the light source unit may be mounted on the chamber unit so that the lower surface of the light source unit may contact the upper surface of the chamber unit.

In the apparatus for collecting photocuring generated gas of example embodiment, a refrigerant circulation flow path through which refrigerant flows may be formed on an upper surface of the light source unit.

### MODES FOR CARRYING OUT THE INVENTION

Hereinafter, an example embodiment according to the present disclosure will be described in detail with reference to the accompanying drawings. Here, the size or shape of components shown in the drawings may be exaggerated for clarity and convenience of explanation. In addition, terms specifically defined in consideration of the configuration and operation of the present disclosure may vary depending on the intention or custom of a user or operator. Definitions of these terms should be made based on the context throughout this specification.

In the description of the present disclosure, it should be noted that orientation or positional relationships indicated by the terms such as "center", "upper", "lower", "left", "right", "vertical", "horizontal", "inside", "outside", "one side", and "the other side" are based on orientation or positional relationships shown in the drawings or orientation or positional relationships usually of disposition when a product according to the present disclosure is used, are merely for the description and brief illustration of the present disclosure, and should not be construed as limiting the present disclosure because they are not suggesting or implying that the indicated apparatus or element must be configured or operated in the specified orientation.

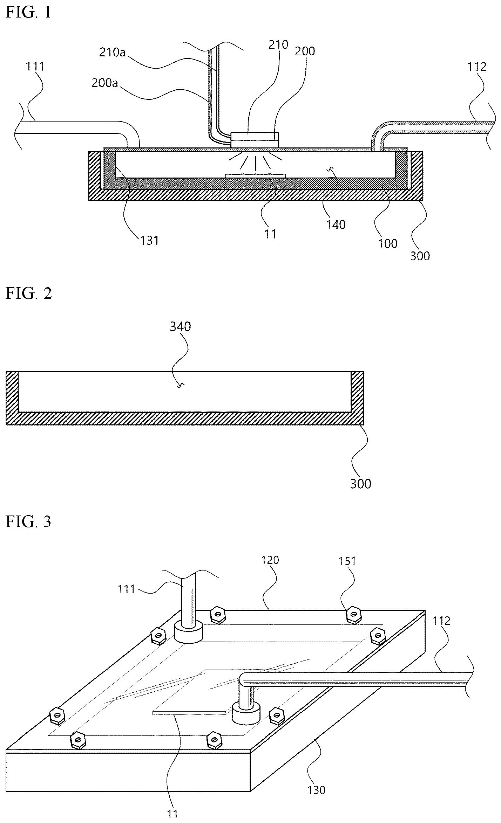

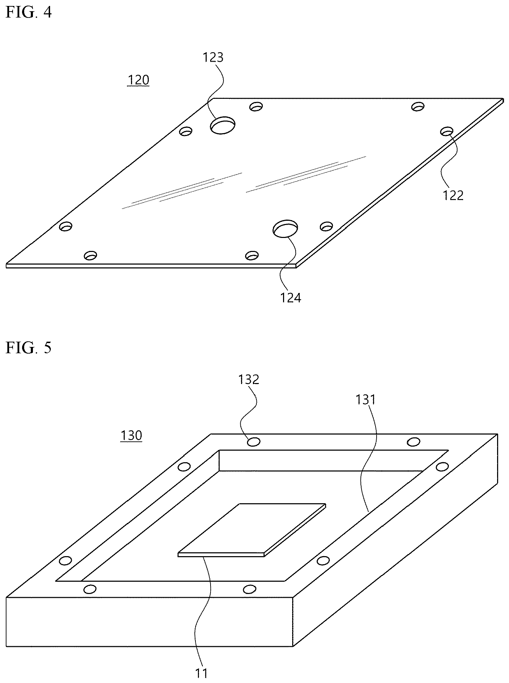

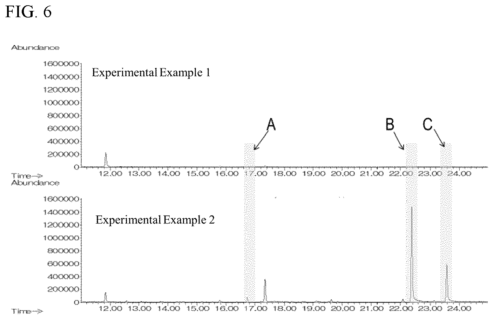

FIG. 1 is a conceptual diagram illustrating an apparatus for collecting photocuring generated gas of the present disclosure. FIG. 2 is a cross-sectional view illustrating an oven unit. FIG. 3 is a perspective view illustrating a chamber unit. FIG. 4 is a perspective view illustrating a transparent cover part. FIG. 5 is a perspective view illustrating a body part. FIG. 6 is a graph illustrating a gas collection result according to an experimental example.

Hereinafter, the apparatus for collecting photocuring generated gas of the present disclosure will be described in detail with reference to FIGS. 1 to 6.

As shown in FIG. 1, the apparatus for collecting photocuring generated gas of an example embodiment of the present disclosure may include,
a chamber unit 100 with a sample accommodating space 140 formed therein, in which a sample 11 is accommodated;
a light source unit 200 configured to irradiate light to an upper surface of the chamber unit;
an oven unit 300 provided with a heating space accommodating the chamber unit 100 therein;
a purge gas injection flow path 111 for injecting a purge gas into the sample accommodating space 140; and
an outgas discharge flow path 112 for discharging the outgas generated in the sample accommodating space 140 to a gas collection pipe located outside the sample accommodating space 140, and
the upper surface of the chamber unit 100 may be provided with a transparent material through which the light is transmitted.

In the apparatus for collecting photocuring generated gas of the present disclosure, the chamber unit 100 which is easily detachable may be accommodated in a heating space 340 in the oven unit 300 with temperature control, the sample 11 is mounted in the sample accommodating space 140 that is an enclosed space formed inside the chamber unit 100, and the gas generated in the sample 11 by the light irradiated by the light source unit 200 mounted on the upper surface of the chamber unit 100 may be moved from the sample accommodating space 140 to the gas collection tube and collected. In other words, the apparatus for collecting photocuring generated gas of the present disclosure may be capable of collecting gas components generated in the photocuring process performed in various temperature environments through the oven unit 300.

As shown in FIG. 1 and FIG. 2, the oven unit 300 may have a heating space 340 formed therein, in which the chamber unit 100 is accommodated. The heating space 340 of the oven unit 300 may be adjusted to a temperature of 30 °C to 270 °C. At least one of a coil heater, an infrared lamp, an induction heating heater, a dielectric heating heater, a warm air system, a heating pad, and a heating jacket may be provided in the oven unit 300 as a heating means for heating the heating space 340. Specifically, the oven unit 300 may be formed in a bowl shape with an open upper surface. In other words, the chamber unit 100 may be accommodated in the heating space 340 through the open upper surface of the oven unit 300. At least one of a coil heater, an infrared lamp, an induction heating heater, a dielectric heating heater, a warm air system, a heating pad, and a heating jacket may be located on the lower surface or sidewall of the oven unit 300 as the heating means.

After the chamber unit 100 is accommodated in the heating space 340 of the oven unit 300, the open upper surface of the oven unit 300 may be covered with a cover means (not shown). The cover means may be provided in the shape of a flat plate perpendicular to the vertical direction. An opening through which the purge gas injection flow path 111 and the outgas discharge flow path 112 pass may be formed in the cover means. The light source unit 200 is located between the lower part of the cover means and the upper part of the chamber unit 100, and a reflective material for concentrating the light emitted from the light source unit 200 to the sample 11 may be coated or laminated on the lower surface of the cover means.

The purge gas injection flow path 111 may be a flow path connecting the chamber unit 100 located inside the oven unit and the purge gas supplying apparatus located outside the oven unit. The purge gas supplying apparatus may be a tank in which the purge gas is compressed and stored, or a pump for injecting the purge gas. The purge gas may be any one selected from N₂, Air, He, Ar, and combinations thereof. The purge gas may be injected into the sample accommodating space 140 of the chamber unit 100 through the purge gas injection flow path 111 at a flow rate of up to 1000 mL/min.

The outgas discharge flow path 112 may be a flow path connecting the chamber unit 100 located inside the oven unit and a gas collection pipe or a gas analysis apparatus located outside the oven unit. The gas collection tube collects and stores gas, and may be, for example, a Tenax (Poly(2,6-diphenylphenylene oxide)) (GR, TA, etc.) adsorption tube. The gas analysis apparatus may be, for example, a gas chromatography (GC) apparatus.

As shown in FIGS. 3 to 5, the chamber unit 100 may include a body part 130 in which a sample mounting groove 131 is formed as the sample accommodating space 140 on an upper surface; and a transparent cover part 120 that covers the sample mounting groove 131 and is coupled to the upper surface of the body part 130.

The transparent cover part 120 may be a quartz plate. The transparent cover part 120 may be provided with an area of, for example, a width of 200 mm and a length of 200 mm or more. The transparent cover part 120 may be formed of a material that transmits 50% or more of the light having a wavelength of 190 nm to 400 nm irradiated by the light source unit 200. In other words, the light irradiated by the light source unit 200 may be transmitted through the transparent cover part 120.

An inlet 123 through which the purge gas is injected and an outlet 124 through which the outgas is discharged may be formed in the transparent cover part 120, and the purge gas injection flow path 111 may be connected to the inlet 123, and the outgas discharge flow path 112 may be connected to the outlet 124.

The inlet 123 and the outlet 124 may be located on the transparent cover part 120 with the sample 11 interposed therebetween. Accordingly, the purge gas injected into the inlet 123 may be discharged to the outlet 124 through the sample 11.

The transparent cover part 120 may cover the sample mounting groove 131 formed in the body part 130, and the inner space of the sample mounting groove 131 may be formed as the sample accommodating space 140. The inner space of the sample mounting groove 131 may be formed in a rectangular parallelepiped. For example, the sample mounting groove 131 formed in the body part 130 may have a width of 200 mm, a length of 200 mm, and a depth of 20 mm. The sample 11 may be mounted on the bottom of the sample mounting groove 131.

A coupling groove 132 is formed on the upper surface of the body part 130, and a coupling hole 122 is formed in the transparent cover part 120 at a position facing the plurality of coupling grooves 132, and a fixing means 151 may pass through the coupling hole 122 and be inserted into the coupling groove 132, so that the transparent cover part 120 may be coupled to the body part 130. For example, the fixing means 151 may be a bolt. For example, a screw thread may be formed on the inner circumferential surface of the coupling groove 132 to be screwed with the fixing means 151. The coupling groove 132 and the coupling hole 122 may be provided in a plurality of pairs. For example, eight pairs may be provided, and two may be formed at a position adjacent to each corner on the rectangular transparent cover part 120 and the upper surface of the body part 130. The fixing means 151 is not limited to a bolt, and may be coupled to the coupling groove 132 or the coupling hole 122 in a one-touch coupling method such as a clamp pin or an anchor. Alternatively, the fixing means is provided in the form of a clip, and without the coupling groove 132 and the coupling hole 122, the edge portions of the cover part 120 and the body part 130 are simultaneously bitten by the fixing means, and the cover part 120 and the body part 130 may be fixed in a state coupled to each other.

The light source unit 200 may be a UV LED. The light source unit 200 may be a surface light source that irradiates light downward from the lower surface. In other words, the light source unit 200 may be provided in a plate shape, for example, may have an area of 20 mm in width and 75 mm in length. The size of the light source unit 200 may be determined in consideration of the size of the sample 11, and may be extended to the maximum size of the sample mounting groove 131 according to the size of the sample 11. For example, it may be formed with an area of 200 mm in width and 200 mm in length. The light source unit 200 may be mounted on the chamber unit 100 so that the lower surface of the light source unit 200 contacts the upper surface of the chamber unit 100. In other words, the light source unit 200 may be mounted on the transparent cover part 120 so that the light emitting surface contacts the transparent cover part 120. With the above structure, when the wavelength of the light irradiated to the sample 11 is to be changed, the wavelength can be easily changed by simply replacing the light source unit 200 provided with a UV LED panel or the like.

The temperature of the heating space 340 of the oven unit 300 and the light intensity of the light source unit 200 may be controlled by the control unit.

A refrigerant circulation flow path 210 through which the refrigerant flows may be formed on an upper surface of the light source unit 200. Antifreeze may circulate and flow in the refrigerant circulation flow path 210. The refrigerant circulation flow path 210 may be connected to a heat exchanging apparatus located outside the oven unit 300 through a flow path. The heat exchanging apparatus may be one that absorbs the heat of the antifreeze.

As shown in FIG. 1, a cable 200a for supplying power or a control signal input and controlling the intensity of a light source is connected to the light source unit 200, and a refrigerant supply pipe 210a for supplying antifreeze may be connected to the refrigerant circulation flow path 210. The covering material of the cable 200a and the material of the refrigerant supply pipe 210a are provided with a flexible material, so that it is possible to easily change the position of the light source unit 200. For example, the covering material of the cable 200a and the material of the refrigerant supply pipe 210a may be a silicone tube, a Tygon tube, or the like.

### Experimental Example 1

In a state in which the transparent cover part 120 was separated, the liquid crystal coating solution was put as the sample 11 in the sample mounting groove 131 of the body part 130 and dried at a temperature of 105 °C for 1 hour.

The transparent cover part 120 was coupled to the body part 130, and without light irradiation through UV LED, gas was collected in a Tenax adsorption tube at a temperature of 80 °C at a rate of 150 mL/min for 10 minutes, and then analyzed through a GC apparatus. This process was repeated 5 times.

### Experimental Example 2

In a state in which the transparent cover part 120 was separated, the liquid crystal coating solution was put as the sample 11 in the sample mounting groove 131 of the body part 130 and dried at a temperature of 105 °C for 1 hour.

The transparent cover part 120 was coupled to the body part 130, and the sample 11 was irradiated with a UV LED of 395 nm at a temperature of 80 °C for 5 minutes.

The gas generated by irradiating the sample 11 with light was collected in a Tenax adsorption tube at a rate of 150 mL/min for 10 minutes, and then analyzed through a GC apparatus.

This process was repeated 5 times.

**TABLE 1**

| Number | Component | Whether detected or not | | 5 reps RSD (%) |
|---|---|---|---|---|
| | | Experimental Example 1 | Experimental Example 2 | |
| 1 | A | X | O | 6.3 |
| 2 | B | X | O | 12.1 |
| 3 | C | X | O | 10.8 |

Table 1 is a table showing the experimental results for Experimental Examples 1 and 2. As shown in Table 1, the experiment was performed with high reproducibility with an RSD value of less than 15%. FIG. 6 is a graph illustrating the experimental results of Experimental Examples 1 and 2. As shown in FIG. 6, it may be seen that, by using the apparatus for collecting photocuring generated gas of the present disclosure, the gas additionally generated when light is irradiated through the UV LED is collected as indicated in Experimental Example 2.

### INDUSTRIAL APPLICABILITY

According to an apparatus for collecting photocuring generated gas of example embodiments of the present disclosure, it is possible to collect gas generated from a material to be analyzed during photocuring by simulating a photocuring process using various light wavelengths including ultraviolet light.

According to an apparatus for collecting photocuring generated gas of example embodiments of the present disclosure, it is possible to accurately identify and analyze the cause of a gas defect.

According to an apparatus for collecting photocuring generated gas of example embodiments of the present disclosure, it is possible to obtain gas generated in the photocuring process according to various wavelengths of light including ultraviolet light by simultaneously performing exposure and heating.

According to an apparatus for collecting photocuring generated gas of example embodiments of the present disclosure, it is possible to easily replace the light source unit, so that gas may be collected in various wavelength bands.

## Claims

1. An apparatus for collecting photocuring generated gas, comprising:
a chamber unit (100) with a sample accommodating space (140) formed therein, in which a sample (11) is accommodated;
a light source unit (200) configured to irradiate light to an upper surface of the chamber unit (100);
an oven unit (300) provided with a heating space (340) accommodating the chamber unit (100) therein;
a purge gas injection flow path (111) for injecting a purge gas into the sample accommodating space (140);
an outgas discharge flow path (112) for discharging outgas generated in the sample accommodating space (140) to a gas collection pipe located outside the sample accommodating space (140);
wherein the chamber unit (100) comprises:
a body part (130) with a sample mounting groove (131) formed on an upper surface thereof as the sample accommodating space (140); and
a transparent cover part (120) configured to cover the sample mounting groove (131) and coupled to the upper surface of the body part (130),
wherein the light irradiated by the light source unit (200) is transmitted through the transparent cover part (120),
**characterized in that**
an inlet (123) through which the purge gas is injected and an outlet (124) through which the outgas is discharged are formed in the transparent cover part (120),
the purge gas injection flow path (111) is connected to the inlet (123), and
the outgas discharge flow path (112) is connected to the outlet (124).

2. The apparatus for collecting photocuring generated gas of claim 1, wherein the transparent cover part (120) is a quartz plate.

3. The apparatus for collecting photocuring generated gas of claim 1, wherein coupling grooves (132) are formed on the upper surface of the body part (130),
coupling holes (122) are formed in the transparent cover part (120) at a position facing the coupling grooves (132), and
fixing means (151) pass through the coupling holes (122) and are inserted into the coupling grooves (132), so that the transparent cover part (120) is coupled to the body part (130).

4. The apparatus for collecting photocuring generated gas of claim 1, wherein the light source unit (200) is configured to irradiate light downward from a lower surface as a surface light source.

5. The apparatus for collecting photocuring generated gas of claim 4, wherein the light source unit (200) is mounted on the chamber unit (100) so that the lower surface of the light source unit (200) contacts the upper surface of the chamber unit (100).

6. The apparatus for collecting photocuring generated gas of claim 5, wherein a refrigerant circulation flow path (210) through which refrigerant flows is formed on an upper surface of the light source unit (200).

## Patentansprüche

1. Vorrichtung zum Sammeln von durch Photohärtung erzeugtem Gas, umfassend:
eine Kammereinheit (100) mit einem darin ausgebildeten Probenaufnahmeraum (140), in dem eine Probe (11) aufgenommen ist;
eine Lichtquelleneinheit (200), die konfiguriert ist, um Licht auf eine obere Oberfläche der Kammereinheit (100) auszustrahlen;
eine Ofeneinheit (300), die mit einem Heizraum (340) versehen ist, der die Kammereinheit (100) darin aufnimmt;
einen Spülgasinjektionsströmungsweg (111) zum Injizieren eines Spülgases in den Probenaufnahmeraum (140);
einen Abgasabgabeströmungsweg (112) zum Abgeben von in dem Probenaufnahmeraum (140) erzeugtem Abgas an ein Gassammelrohr, das sich außerhalb des Probenaufnahmeraums (140) befindet;
wobei die Kammereinheit (100) umfasst:
einen Körperteil (130) mit einer Probenmontagenut (131), die auf einer oberen Oberfläche davon als der Probenaufnahmeraum (140) ausgebildet ist; und
einen transparenten Abdeckteil (120), der konfiguriert ist, um die Probenmontagenut (131) abzudecken, und der mit der oberen Oberfläche des Körperteils (130) gekoppelt ist,
wobei das von der Lichtquelleneinheit (200) ausgestrahlte Licht durch den transparenten Abdeckteil (120) übertragen wird,
**dadurch gekennzeichnet, dass**
ein Einlass (123), durch den das Spülgas injiziert wird, und ein Auslass (124), durch den das Abgas abgegeben wird, in dem transparenten Abdeckteil (120) ausgebildet sind,
der Spülgasinjektionsströmungsweg (111) mit dem Einlass (123) verbunden ist, und
der Abgasabgabeströmungsweg (112) mit dem Auslass (124) verbunden ist.

2. Vorrichtung zum Sammeln von durch Photohärtung erzeugtem Gas nach Anspruch 1, bei der der transparente Abdeckteil (120) eine Quarzplatte ist.

3. Vorrichtung zum Sammeln von durch Photohärtung erzeugtem Gas nach Anspruch 1, bei der Kopplungsnuten (132) auf der oberen Oberfläche des Körperteils (130) ausgebildet sind,
Kopplungslöcher (122) in dem transparenten Abdeckteil (120) an einer Position ausgebildet sind, die den Kopplungsnuten (132) zugewandt ist, und
Befestigungsmittel (151) durch die Kopplungslöcher (122) hindurchgehen und in die Kopplungsnuten (132) eingesetzt sind, so dass der transparente Abdeckteil (120) mit dem Körperteil (130) gekoppelt ist.

4. Vorrichtung zum Sammeln von durch Photohärtung erzeugtem Gas nach Anspruch 1, bei der die Lichtquelleneinheit (200) konfiguriert ist, um Licht von einer unteren Oberfläche als Oberflächenlichtquelle nach unten auszustrahlen.

5. Vorrichtung zum Sammeln von durch Photohärtung erzeugtem Gas nach Anspruch 4, bei der die Lichtquelleneinheit (200) auf der Kammereinheit (100) montiert ist, so dass die untere Oberfläche der Lichtquelleneinheit (200) die obere Oberfläche der Kammereinheit (100) berührt.

6. Vorrichtung zum Sammeln von durch Photohärtung erzeugtem Gas nach Anspruch 5, bei der ein Kühlmittelzirkulationsströmungsweg (210), durch den Kühlmittel strömt, auf einer oberen Oberfläche der Lichtquelleneinheit (200) ausgebildet ist.

## Revendications

1. Appareil de collecte de gaz généré par photodurcissement, comprenant :
une unité chambre (100) ayant un espace de réception d'échantillon (140) y étant formé, dans laquelle un échantillon (11) est reçu ;
une unité source lumineuse (200) configurée pour irradier de la lumière vers une surface supérieure de l'unité chambre (100) ;
une unité four (300) fournie avec un espace de chauffage (340) y recevant l'unité chambre (100) ;
un trajet d'écoulement d'injection de gaz de purge (111) pour injecter un gaz de purge dans l'espace de réception d'échantillon (140) ;
un trajet d'écoulement de décharge de gaz de sortie (112) pour décharger un gaz de sortie généré dans l'espace de réception d'échantillon (140) vers un tuyau de collecte de gaz situé à l'extérieur de l'espace de réception d'échantillon (140) ;
dans lequel l'unité chambre (100) comprend :
une partie corps (130) ayant une rainure de montage d'échantillon (131) formée sur une surface supérieure de celle-ci étant l'espace de réception d'échantillon (140) ; et
une partie couvercle transparent (120) configurée pour recouvrir la rainure de montage d'échantillon (131) et couplée à la surface supérieure de la partie corps (130),
dans lequel la lumière irradiée par l'unité de source lumineuse (200) est transmise à travers la partie couvercle transparent (120),
**caractérisé en ce que**
un orifice d'entrée (123) à travers lequel le gaz de purge est injecté et un orifice de sortie (124) à travers lequel le gaz de sortie est déchargé sont formés dans la partie couvercle transparent (120),
le trajet d'écoulement d'injection de gaz de purge (111) est raccordé à l'orifice d'entrée (123), et
le trajet d'écoulement de décharge de gaz de sortie (112) est raccordé à l'orifice de sortie (124).

2. Appareil de collecte de gaz généré par photodurcissement selon la revendication 1, dans lequel la partie couvercle transparent (120) est une plaque de quartz.

3. Appareil de collecte de gaz généré par photodurcissement selon la revendication 1, dans lequel des rainures de couplage (132) sont formées sur la surface supérieure de la partie corps (130),
des trous de couplage (122) sont formés dans la partie couvercle transparent (120) à une position face aux rainures de couplage (132), et
des moyens de fixation (151) passent à travers les trous de couplage (122) et sont introduits dans les rainures de couplage (132), de telle sorte que la partie couvercle transparent (120) est couplée à la partie corps (130).

4. Appareil de collecte de gaz généré par photodurcissement selon la revendication 1, dans lequel l'unité de source lumineuse (200) est configurée pour irradier la lumière en descendant d'une surface inférieure étant une source lumineuse de surface.

5. Appareil de collecte de gaz généré par photodurcissement selon la revendication 4, dans lequel l'unité de source lumineuse (200) est montée sur l'unité chambre (100) de telle sorte que la surface inférieure de l'unité de source lumineuse (200) entre en contact avec la surface supérieure de l'unité chambre (100).

6. Appareil de collecte de gaz généré par photodurcissement selon la revendication 5, dans lequel un trajet d'écoulement de circulation de réfrigérant (210) à travers lequel circule un réfrigérant est formé sur une surface supérieure de l'unité de source lumineuse (200).
